# EUROPEAN PATENT APPLICATION

(11) **EP 3 546 914 A1**
(43) Date of publication of application: **02.10.2019**
(21) Application number: 19165304.7
(22) Date of filing: 26.03.2019
(51) Int. Cl.: G01M 15/14, F01D 21/00, G01L 3/02

(54) **METHOD AND SYSTEM FOR DETECTING SHEAR OF A ROTATING SHAFT**

(30) Priority: 26.03.2018 US 201862648151 P; 14.09.2018 US 201816131387
(71) Applicant: Pratt & Whitney Canada Corp., Longueuil, Québec J4G 1A1 (CA)
(72) Inventor: BIRCH, Glenn, (01BE5) Longueuil, Québec J4G 1A1 (CA); SYED, Yusuf, (01BE5) Longueuil, Québec J4G 1A1 (CA)
(74) Representative: Dehns

(57) **Abstract**

Systems and methods for detecting shear of a rotating shaft (20) are described. A first measurement and a second measurement of a rotational speed of the shaft (20) are acquired. The first measurement is taken at a first location along the shaft (20) and the second measurement taken at a second location along the shaft. The first location is axially-spaced from the second location. The first and second location are on opposite sides of an expected breakage point of the shaft (20). A first rate of change of the rotational speed is determined from the first measurement. A second rate of change is determined from the second measurement. Shear of the shaft is detected when the first rate of change is positive and the second rate of change is negative.

## Description

### TECHNICAL FIELD

The present disclosure relates generally to detecting shaft shear, and, more particularly, to detecting shear of a rotating shaft based on rotational speed measurements of the shaft.

### BACKGROUND OF THE ART

The low pressure shaft on an aircraft gas turbine engine connects the lower pressure turbine to the fan, and transfers the power from the turbine to the output load, such as a fan in the case of a turbofan. During engine operation, the shaft experiences high torsional loads. In the unlikely event of a shaft shear and loss of load, the fuel must be shut off quickly to prevent damage to the engine and provide containment.

Methods exist for detecting shaft shear. For example, probes or sensors may be used to detect the axial motion of the shaft after the shear. However, various existing methods involve delayed indicators to detect shaft shear and are not well-suited for a process requiring rapid fuel shutoff.

There is therefore a need to improve on existing methods for detecting shaft shear.

### SUMMARY

In one aspect, there is provided a method for detecting shear of a rotating shaft, the method comprising: acquiring, at a computing device, a first measurement and a second measurement of a rotational speed of the shaft, the first measurement taken at a first location along the shaft and the second measurement taken at a second location along the shaft, the first location axially-spaced from the second location; determining, at the computing device, a first rate of change of the rotational speed from the first measurement and a second rate of change of the rotational speed from the second measurement; and detecting, at the computing device, shear of the shaft (between the first and second locations) when the first rate of change is positive and the second rate of change is negative.

In an embodiment, the first and second locations may be on opposite sides of an expected breakage point of the shaft.

In a further embodiment of any of the above, detecting shear of the shaft comprises monitoring an amount of time during which the first rate of change is positive and the second rate of change is negative, and detecting shear of the shaft when the amount of time exceeds a predetermined time period.

In a further embodiment of any of the above, detecting shear of the shaft comprises monitoring a first amount of time during which the first rate of change exceeds a first threshold and a second amount of time during which the second rate of change is below a second threshold, and detecting shear of the shaft when at least one of the first amount of time and the second amount of time exceeds a predetermined time period.

In a further embodiment of any of the above, detecting shear of the shaft comprises determining a difference between the first rate of change and the second rate of change, comparing the difference to a threshold, and detecting shear of the shaft when the difference exceeds the threshold.

In a further embodiment of any of the above, shear of the shaft is detected when the difference exceeds the threshold for a predetermined time period.

In a further embodiment of any of the above, detecting shear of the shaft comprises determining a rate of change of a difference between the first rate of change and the second rate of change, comparing the rate of change of the difference to a threshold, and detecting shear of the shaft when the rate of change of the difference exceeds the threshold.

In a further embodiment of any of the above, shear of the shaft is detected when the rate of change of the difference exceeds the threshold for a predetermined time period.

In a further embodiment of any of the above, the rotating shaft is that of a gas turbine engine comprising a turbine and a compressor, the first end of the shaft is driven by the turbine and the second end of the shaft is loaded with the compressor.

In a further embodiment of any of the above, acquiring the first measurement comprises obtaining the first measurement from a first phonic wheel sensing assembly and acquiring the second measurement comprises obtaining the second measurement from a second phonic wheel sensing assembly.

In a further embodiment of any of the above, the shaft has a first end being driven and a second end being loaded, the first measurement taken adjacent the first end and the second measurement taken adjacent the second end.

In another aspect, there is provided a system for detecting shear of a rotating shaft, the system comprising: at least one processing unit; and a non-transitory computer-readable memory having stored thereon program instructions executable by the at least one processing unit for: acquiring a first measurement and a second measurement of a rotational speed of the shaft, the first measurement taken at a first location along the shaft and the second measurement taken at a second location along the shaft, the first location axially-spaced from the second location; determining a first rate of change of the rotational speed from the first measurement and a second rate of change of the rotational speed from the second measurement; and detecting shear of the shaft (between the first and second locations) when the first rate of change is positive and the second rate of change is negative.

In an embodiment, the first and second location may be on opposite sides of an expected breakage point of the shaft.

In a further embodiment of any of the above, the program instructions executable by the at least one processing unit for detecting shear of the shaft comprise monitoring an amount of time during which the first rate of change is positive and the second rate of change is negative, and detecting shear of the shaft when the amount of time exceeds a predetermined time period.

In a further embodiment of any of the above, the program instructions executable by the at least one processing unit for detecting shear of the shaft comprise monitoring a first amount of time during which the first rate of change exceeds a first threshold and a second amount of time during which the second rate of change is below a second threshold, and detecting shear of the shaft when at least one of the first amount of time and the second amount of time exceeds a predetermined time period.

In a further embodiment of any of the above, the program instructions executable by the at least one processing unit for detecting shear of the shaft comprise determining a difference between the first rate of change and the second rate of change, comparing the difference to a threshold, and detecting shear of the shaft when the difference exceeds the threshold.

In a further embodiment of any of the above, shear of the shaft is detected when the difference exceeds the threshold for a predetermined time period.

In a further embodiment of any of the above, the program instructions executable by the at least one processing unit for detecting shear of the shaft comprise determining a rate of change of a difference between the first rate of change and the second rate of change, comparing the rate of change of the difference to a threshold, and detecting shear of the shaft when the rate of change of the difference exceeds the threshold.

In a further embodiment of any of the above, shear of the shaft is detected when the rate of change of the difference exceeds the threshold for a predetermined time period.

In a further embodiment of any of the above, the rotating shaft is that of a gas turbine engine comprising a turbine and a compressor, the first end of the shaft is driven by the turbine and the second end of the shaft is loaded with the compressor.

In a further embodiment of any of the above, the program instructions executable by the at least one processing unit for acquiring the first measurement comprise obtaining the first measurement from a first phonic wheel sensing assembly and the program instructions executable by the at least one processing unit for acquiring the second measurement comprise obtaining the second measurement from a second phonic wheel sensing assembly.

In a further embodiment of any of the above, the shaft has a first end being driven and a second end being loaded, the first measurement taken adjacent the first end and the second measurement taken adjacent the second end.

### DESCRIPTION OF THE DRAWINGS

Reference is now made to the accompanying figures in which:
Figure 1 is a schematic cross-sectional view of an example gas turbine engine;
Figure 2 is a flowchart illustrating an example method for detecting shear of a rotating shaft in accordance with an embodiment;
Figure 3A is a flowchart illustrating the step of Figure 2 of detecting shear of a rotating shaft, based on a persistence time, in accordance with a specific and non-limiting example of implementation;
Figure 3B is a flowchart illustrating the step of Figure 2 of detecting shear of a rotating shaft, based on thresholds and persistence times, in accordance with a specific and non-limiting example of implementation;
Figure 3C is a flowchart illustrating the step of Figure 2 of detecting shear of a rotating shaft, based on a difference between a first rate of change of the rotational speed of the shaft and a second rate of change of the rotational speed of the shaft, in accordance with a specific and non-limiting example of implementation;
Figure 3D is a flowchart illustrating the step of Figure 2 of detecting shear of a rotating shaft, based on a rate of change of a difference between a first rate of change of the rotational speed of the shaft and a second rates of change of the rotational speed of the shaft, in accordance with a specific and non-limiting example of implementation;
Figure 4 is a block diagram of an example computing system for implementing the method of Figures 2 and 3A to 3D in accordance with an embodiment;
Figure 5 is a schematic diagram illustrating a shaft and two phonic wheels for obtaining speed measurements of the shaft; and
Figure 6 is a block diagram of a system for detecting shear of a rotating shaft in accordance with an embodiment.

It will be noted that throughout the appended drawings, like features are identified by like reference numerals.

### DETAILED DESCRIPTION

Systems and methods for detecting shear of a rotating shaft driven by a source and being loaded are described herein. The systems and methods for detecting shear of the shaft are based on detecting a positive rate of change of the rotational speed of the shaft on a side of the shaft being driven by the source and a negative rate of change of the rotational speed of the shaft on a side of the shaft being loaded.

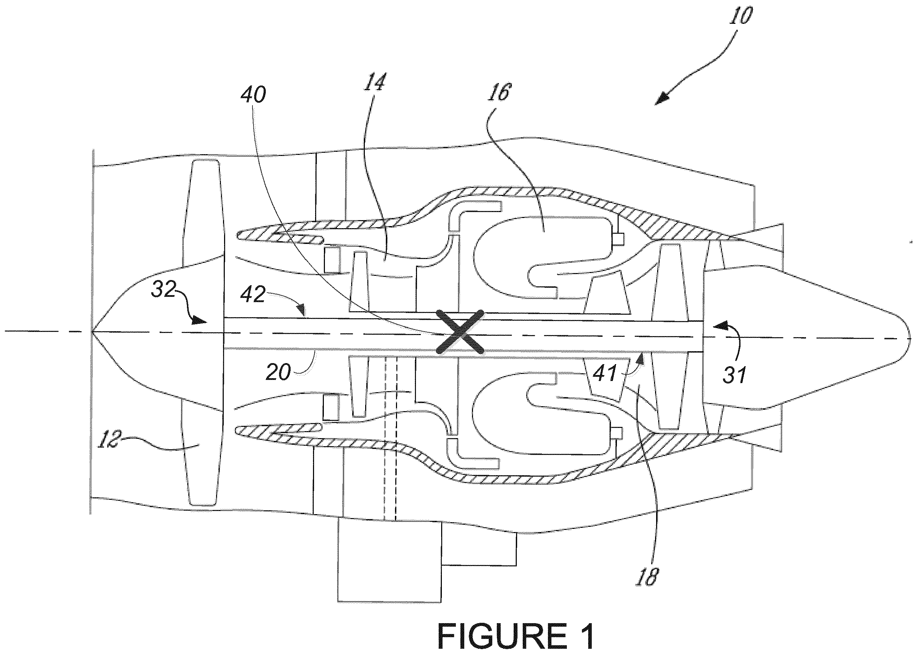

Figure 1 illustrates a gas turbine engine 10 of a type that may be provided for use in flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. A rotatable shaft 20 is provided between the turbine 18, and the fan 12. The shaft has a first end 31 and a second end 32, the second end 32 being opposite the first end 31. The shaft is driven by the turbine section 18 adjacent the first end 31, which causes the shaft 20 to rotate. The shaft is loaded by the fan 12 adjacent the second end 32.

Shaft shear 40 may occur at any point along the shaft 20. When the shaft 20 shears, the sudden unloading results in a rapid untwisting of the shaft 20. The shaft 20 has a first side 41 and a second side 42 opposite the first side 41. The first side 41 of the shaft 20 is adjacent the first end 31 of the shaft 20 and the second side 42 of the shaft 20 is adjacent the second end 32. Note that while the turbine engine 10 illustrated in Figure 1 is a turbofan engine, the detection methods and systems described herein may also be applicable to turboprop engines, turboshaft engines and other types of gas turbine engines. In addition, the teachings herein are not limited to turbine engines as shear of any rotating loaded shaft provided between a source (such as the turbine section 18) and a load (such as the fan 12 and/or the compressor 14) may be detected using the detection methods and systems described herein. The source and the load may vary depending on practical implementations.

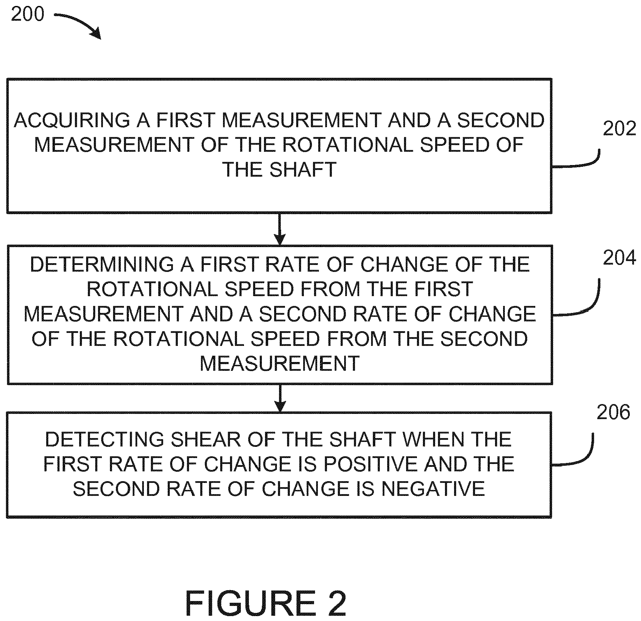

With reference to Figure 2, there is shown a flowchart illustrating an example method 200 for detecting shear of a rotating shaft, such as the shaft 20 of the engine 10 of Figure 1. While the method 200 is described herein with reference to the shaft 20 of the engine 10 of Figure 1, this is for example purposes. The method 200 for detecting shear may be applied to any shaft under torsional load.

At step 202, a first measurement of a rotational speed of the shaft 20 and a second measurement of a rotational speed of the shaft 20 are acquired. The first measurement is taken at a first location along the shaft 20 and the second measurement is taken at a second location along the shaft 20. The first location is axially-spaced from the second location. In accordance with an embodiment, the first location and the second location are on opposite sides of an expected breakage point (e.g. shaft shear 40) of the shaft 20. For example, the first measurement is taken at the first side 41 of the shaft 20 and the second measurement is taken at the second side 42 of the shaft 20. The rotational speed of the shaft 20 refers to the number of turns or revolutions of the shaft 20 per unit of time. In accordance with an embodiment, the rotational speed of the shaft 20 is taken adjacent the first end 31 (or the second end 32) and corresponds to the rotational speed of the shaft 20 taken at or in near proximity to the first end 31 (or the second end 32). In the illustrated embodiment of Figure 1, the rotational speed of the shaft 20 is taken adjacent the first end 31 and corresponds to the rotational speed of the shaft 20 taken at or in near proximity to the turbine section 18 (i.e., the source). Similarly, in the illustrated embodiment, the rotational speed of the shaft 20 is taken adjacent the second end 32 and corresponds to the rotational speed of the shaft 20 taken at or in near proximity to the fan 12 (i.e., the load).

The first measurement may be obtained from a first measuring device comprising one or more sensors configured for measuring the rotational speed of the shaft 20 at the first side 41. Similarly, the second measurement may be obtained from a second measuring device comprising one or more sensors configured for measuring the rotational speed of the shaft 20 at the second side 42. Each of the first and second measuring devices may comprise a phonic wheel assembly and a magnetic sensor, a proximity sensor, an optical sensor, an inductive sensor, or any other suitable sensor. The location of phonic wheel assembly and/or the sensors may vary depending on the practical implementation. In some embodiments, the first measurement and the second measurement are continuously measured. The first measurement and the second measurement may be obtained in real time and/or may be recorded regularly in accordance with any suitable time interval. Step 202 may comprise triggering an action to acquire the first measurement and the second measurement from the measuring devices whenever method 200 is initiated. Alternatively, the first measurement and the second measurement may be provided by an engine computer or an aircraft computer.

At step 204, a first rate of change of the rotational speed of the shaft 20 is determined from the first measurement and a second rate of change of the rotational speed of the shaft 20 is determined from the second measurement. Rate of change of the rotational speed of the shaft 20 refers to an increase or a decrease in the rotational speed of the shaft 20 as a function of time. For example, when the rotational speed of the shaft 20 at the first side 41 is increasing over time, a corresponding rate of change (increase in speed) is detected at the first side 41. By way of another example, when the rotational speed of the shaft 20 at the second side 42 is decreasing over time, a corresponding rate of change (decrease in speed) is detected at the second side 42. In accordance with an embodiment, the first rate of change and the second rate of change are continuously determined. The first rate of change and the second rate of change may be determined in real time and/or may be determined regularly in accordance with any suitable time interval.

At step 206, shear 40 of the shaft 20 is detected when the first rate of change is positive and the second rate of change is negative. In accordance with an embodiment, the first rate of change and the second rate of change are monitored to detect when the first rate of change is positive and when the second rate of change is negative. Monitoring of the first rate of change and the second rate of change may be performed in real time and/or may be performed regularly in accordance with any suitable time interval. When the first rate of change is positive this may be referred to as an acceleration and when the second rate of change is negative this may be referred to as a deceleration. In other words, shear 40 of the shaft 20 is detected based on an acceleration of the shaft 20 at the source and a deceleration of the shaft 20 at the load. It should be appreciated that by using rate of change measurements from both sides of the shaft 20 that the time for detecting shear 40 of the shaft 20 may be reduced.

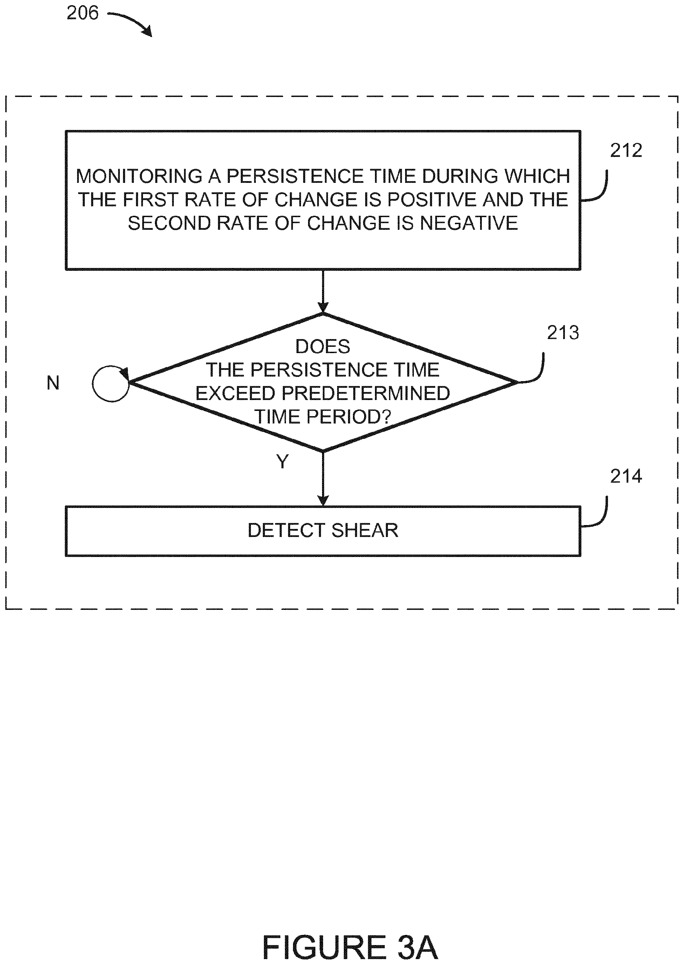

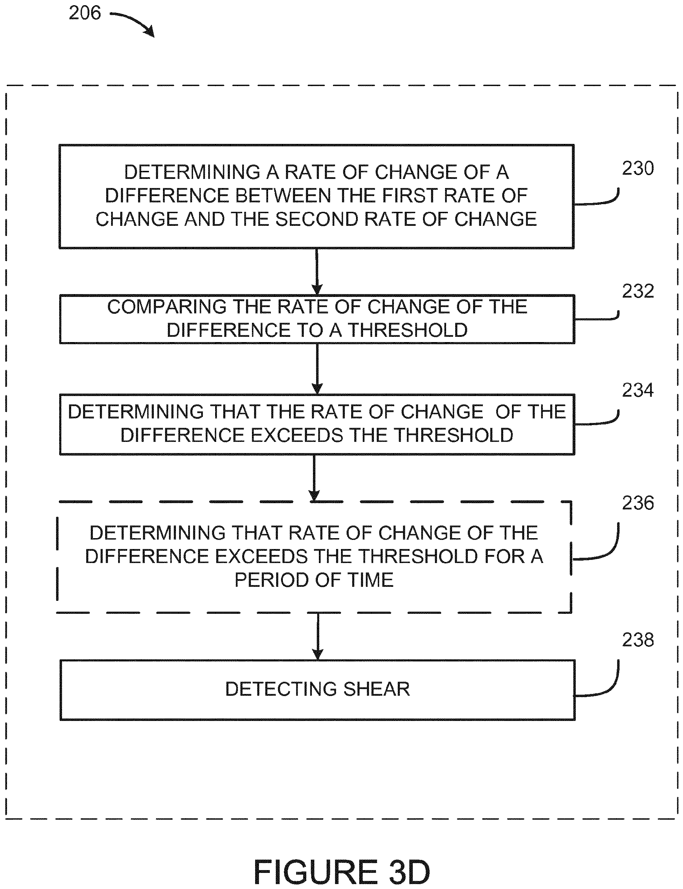

Figure 3A illustrates the step 206 of detecting shear 40 of the shaft 20 in accordance with a first embodiment. At step 212, a persistence time is monitored during which the first rate of change is positive and the second rate of change is negative. The persistence time refers to an amount of time during which the first rate of change is positive and the second rate of change is negative. At step 213, the persistence time is compared to a predetermined time period to determine if the persistence time exceeds the predetermined time period. If the persistence time does not exceed the predetermined time period, step 213 is repeated. When the persistence time exceeds the predetermined time period, shear 40 of the shaft 20 is detected at step 214.

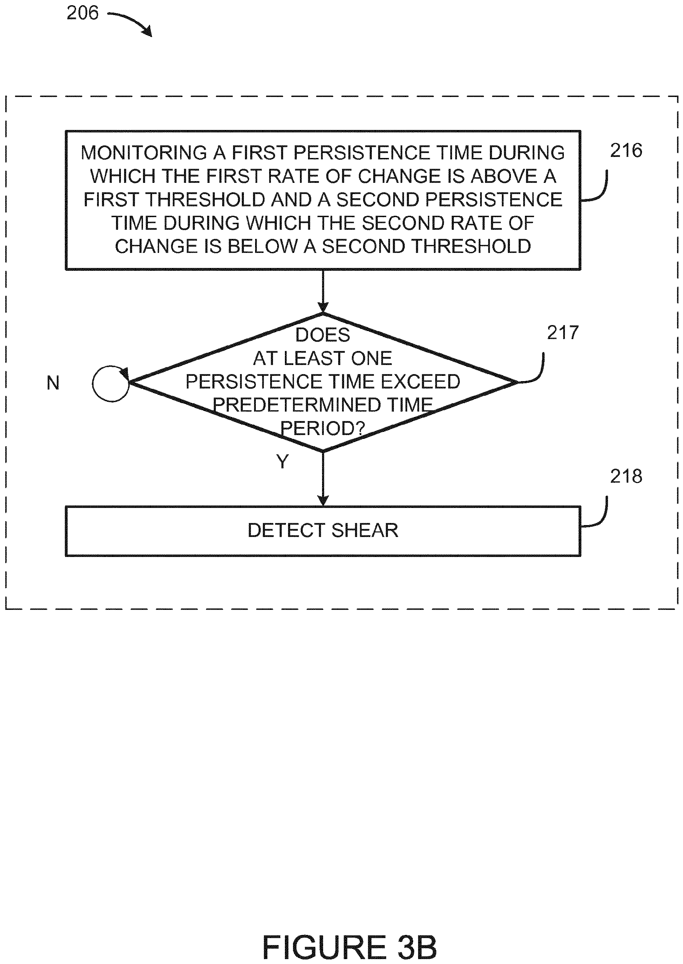

Figure 3B illustrates the step 206 of detecting shear 40 of the shaft 20 in accordance with another embodiment. At step 216, an amount of time (referred to herein as a "first persistence time") during which the first rate of change is above a first threshold and an amount of time (referred to herein as a "second persistence time") during which the second rate of change is below a second threshold are monitored. The first threshold is any suitable positive value and the second threshold is any suitable negative value. At step 217, the first persistence time and the second persistence time are each compared to a predetermined time period to determine if the first persistence time and/or the second persistence time exceeds the predetermined time period. The predetermined time period may be referred to as a "second time period" to differentiate from the time period of step 213 which may be referred to as "first time period". If both the first and second persistence times do not exceed the second time period, step 217 is repeated. In some embodiments, when either one of the first and second persistence times exceeds the second time period, shear 40 of the shaft 20 is detected at step 218. Alternatively, in some embodiment, when both of the first and second persistence times exceed the second time period, shear 40 of the shaft 20 is detected at step 218.

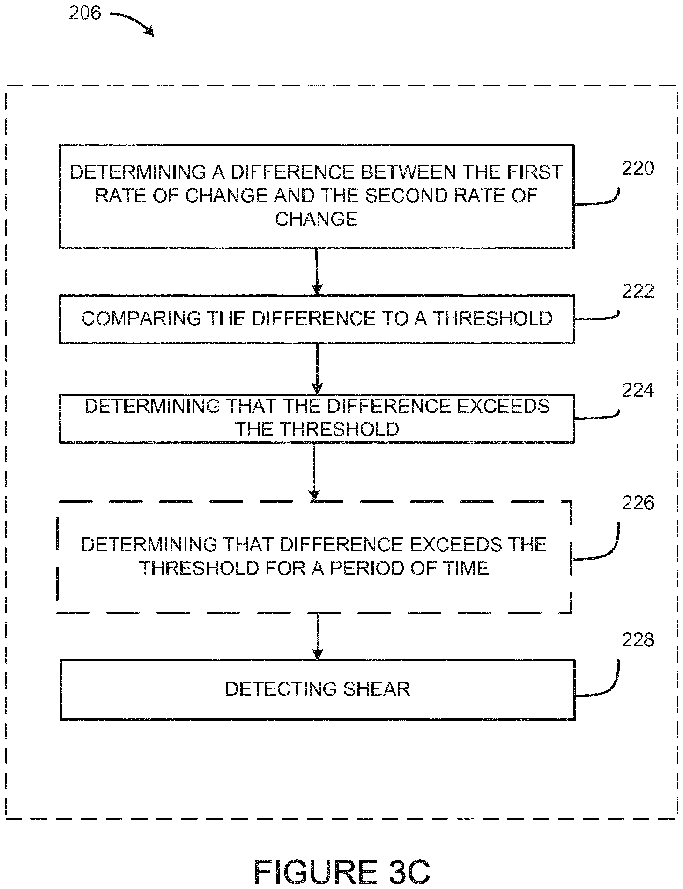

Figure 3C illustrates the step 206 of detecting shear 40 of the shaft 20 in accordance with yet another embodiment. At step 220, a difference between the first rate of change and the second rate of change is determined. At step 222, the difference is compared to a threshold (referred herein to as a "difference threshold"). At step 224, it is determined if the difference exceeds the difference threshold. In some embodiments, when the difference exceeds the difference threshold, shear 40 of the shaft 20 is detected at step 228. In some embodiments, at step 226, it is determined if the difference exceeds the difference threshold for a predetermined time period (referred to herein as a "third time period"). At step 226, a persistence time may be monitored after it is determined at step 224 that the difference exceeds the difference threshold. The persistence time may be referred to as a "third persistence time" to differentiate from the persistence time of step 212. The third persistence time corresponds to an amount of time that the difference exceeds the difference threshold. The third persistence time may be compared to the third time period to determine that the difference exceeds the difference threshold for the third time period. In some embodiments, when the difference exceeds the difference threshold for the third time period, shear 40 of the shaft 20 is detected at step 228.

With reference to Figure 3C, a flowchart illustrates an example of detecting shear 40 of the shaft 20 in accordance with a specific and non-limiting example of implementation of step 206. At step 230, a rate of change of a difference between the first rate of change and the second rate of change is determined. At step 232, the rate of change of the difference is compared to a threshold. The threshold may be referred to herein as a "rate of change threshold". At step 234, it is determined if the rate of change of the difference exceeds the rate of change threshold. In some embodiments, when the rate of change of the difference exceeds the rate of change threshold, shear 40 of the shaft 20 is detected at step 238. In some embodiments, at step 236, it is determined if the rate of change of the difference exceeds the rate of change threshold for a predetermined time period (referred to as a "fourth time period"). At step 236, a persistence time (referred to as a "fourth persistence time") may be monitored after the rate of change of the difference exceeds the rate of change threshold at step 234. The fourth persistence time corresponding to an amount of time that the rate of change of the difference exceeds the rate of change threshold. The fourth persistence time may be compared to the fourth time period to determine that the rate of change of the difference exceeds the rate of change threshold for the fourth time period. In some embodiments, when the rate of change of the difference exceeds the rate of change threshold for the fourth time period, shear 40 of the shaft 20 is detected at step 238.

The values of the first time period, the second time period, the third time period, the fourth time period, the first threshold, the second threshold, the difference threshold and the rate of change threshold may vary depending on practical implementations. The one or more of the first time period, the second time period, the third time period, the fourth time period, the first threshold, the second threshold, the difference threshold and the rate of change threshold are predetermined. The first time period, the second time period, the third time period, the fourth time period, the first threshold, the second threshold, the difference threshold and/or the rate of change threshold may be determined from computer simulation, engine testing, and/or using any other suitable technique. The first time period, the second time period, the third time period, the fourth time period, the first threshold, the second threshold, the difference threshold and/or the rate of change threshold may be set for the purposes of detecting shear 40 of the shaft 20. The first time period, the second time period, the third time period, the fourth time period, the first threshold, the second threshold, the difference threshold and/or the rate of change threshold may be determined to distinguish shaft shear from other events such as foreign object debris (e.g., bird strike), flameout, ringing, slam acceleration/deceleration, surge and/or any other suitable engine event. The first time period, the second time period, the third time period, the fourth time period, the first threshold, the second threshold, the difference threshold and/or the rate of change threshold may be determined to detect shear 40 of the shaft 20 within a certain period of time before shear 40 of the shaft 20 cannot be contained.

In some embodiments, a signature is generated from the first rate of change and the second rate of change. The signature comprises one or more signals which represent the first rate of change and the second rate of change. The signature may comprise a first signal of the first rate of change over a period of time and a second signal of the second rate of change over a period of time. The signature may comprise an arithmetic function of the first rate of change and the second rate of change over a period of time. For example, the arithmetic function may be a difference between the first rate of change and the second rate. The signature may be used for detecting shear 40 of the shaft 20. For example, the signature may be compared to a detection signature that indicates shaft shear; and shear 40 of the shaft 20 is detected when the signature correlates to the detection signature within a threshold value (e.g., 90%, 95%, etc.).

The signature may be identified as being distinct from other events such as foreign object debris (e.g., bird strike), flameout, ringing, slam acceleration/deceleration, surge and/or any other suitable event. In other words, other events such as foreign object debris (e.g., bird strike), flameout, ringing, slam acceleration/deceleration, surge and/or any other suitable event may produce a different signature from that of a signature indicative of shear. Thus, the signature may be used for the purposes of avoiding false detection of events such as a foreign object debris (e.g., bird strike), flameout, ringing, slam acceleration/deceleration, surge and/or any other suitable event.

In some embodiments, if one of the first measuring device or the second measuring device fails, then a single measuring device may be used. In some embodiments, the method 200 may further comprise detecting a failure of a given one of the first measuring device and the second measuring device. When the failure occurs, the method 200 may further comprise determining the rate of change of an operational one of the measuring devices. The method 200 may further comprise detecting shear 40 of the shaft 20 from the rate of change of the operational measuring device when the rate of change of the operational measuring device exceeds a threshold.

In some embodiments, in response to detecting shear 40 of the shaft 20, the method 200 further comprises sending a shutdown command for shutting down the engine 10. The shutdown command may be a fuel shutoff command for shutting off the fuel supply to the engine 10. For example, the shutdown command may be a solenoid command for shutting off fuel supply to the engine 10.

In some embodiments, in response to detecting shear 40 of the shaft 20, the method 200 further comprises sending an alert to an aircraft computer and/or system which may then indicate to a pilot that shear 40 of the shaft 20 is detected. The pilot may take a corrective action such as shutting down the engine 10. For example, the pilot may shutdown the engine 10 by placing a RUN/OFF switch (used to turn on and off the engine 10) in an OFF position.

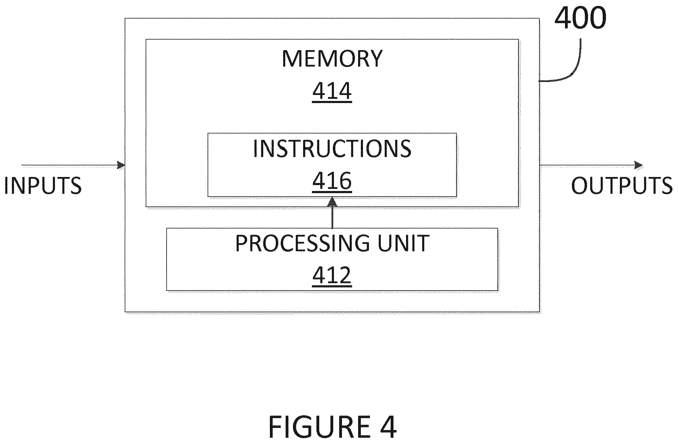

With reference to Figure 4, the method 200 may be implemented using a computing device 400 comprising a processing unit 412 and a memory 414 which has stored therein computer-executable instructions 416. The processing unit 412 may comprise any suitable devices configured to implement the system such that instructions 416, when executed by the computing device 400 or other programmable apparatus, may cause the functions/acts/steps of the method 200 as described herein to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412. In some embodiments, the computing device 400 can be implemented as part of a full-authority digital engine controls (FADEC) or other similar device, including electronic engine control (EEC), engine control unit (ECU), and the like.

The methods and systems for shaft shear detection described herein may be implemented in a high level procedural or object oriented programming or scripting language, or a combination thereof, to communicate with or assist in the operation of a computer system, for example the computing device 400. Alternatively, the methods and systems for detection may be implemented in assembly or machine language. The language may be a compiled or interpreted language. Program code for implementing the methods and systems for detection may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for detection may also be considered to be implemented by way of a non-transitory computer-readable storage medium having a computer program stored thereon. The computer program may comprise computer-readable instructions which cause a computer, or in some embodiments the processing unit 412 of the computing device 400, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

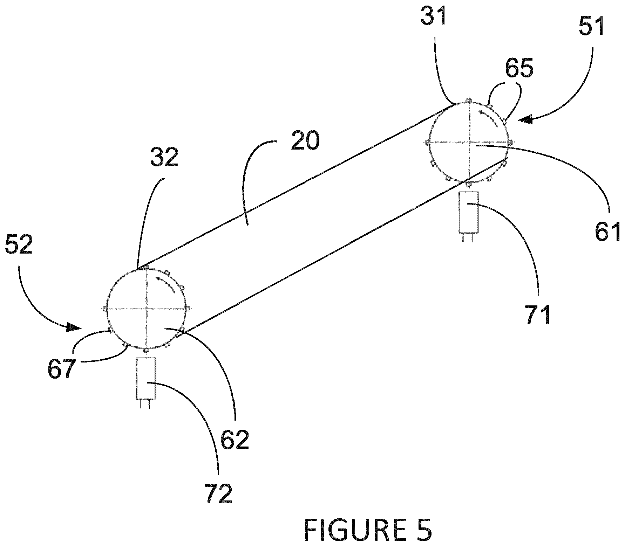

With reference to Figure 5, an example of the first measuring device and the second measuring device is illustrated in accordance with an embodiment. In this example, the first measuring device is a first phonic wheel assembly 51 comprising a first phonic wheel 61 having a plurality of teeth 65 distributed around an outer surface thereof. The first phonic wheel 61 is placed in contact with the rotating shaft 20 at the first end 31 of the shaft 20. The first phonic wheel assembly 51 comprises a first magnetic sensor 71 positioned relative to the first phonic wheel 61. The rotating shaft 20 propels the first phonic wheel 61, creating pulses that are read by the sensor 71 and converted into revolutions per unit time. The first phonic wheel 61 is used to induce pulse signals (e.g., voltage signals) into the first sensor 71; and the pulse signals are then converted into a rotational speed. Similarly, in this example, the second measuring device is a second phonic wheel assembly 52 comprising a second phonic wheel 62 having a plurality of teeth 67 distributed around an outer surface thereof. The second phonic wheel 62 is placed in contact with the rotating shaft 20 at the second end 32 of the shaft 20. The second phonic wheel assembly 52 comprises a second magnetic sensor 72 positioned relative to the second phonic wheel 62. The rotating shaft 20 propels the second phonic wheel 62, creating pulses that are read by the second sensor 72 and converted into revolutions per unit time. The second phonic wheel 62 is used to induce pulse signals (e.g., voltage signals) into the second sensor 72; and the pulse signals are then converted into a rotational speed. In accordance with an embodiment, the first phonic wheel 61 and the second phonic wheel 62 are made of a ferrous material. The first phonic wheel 61 and/or the second phonic wheel 62 may be referred to as a circular ring.

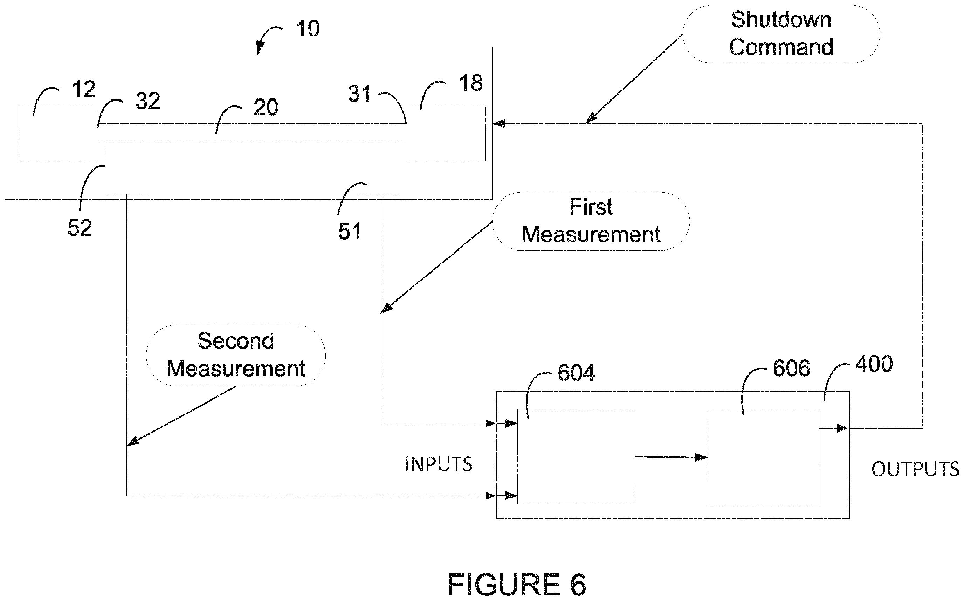

With reference to Figure 6, a block diagram illustrates a system for shaft shear detection in accordance with an embodiment. In this example embodiment, a first measurement is obtained from the first phonic wheel assembly 51 and a second measurement is obtained from the second phonic wheel assembly 52. The computing device 400 implements the method 200 for detecting shear 40 of the shaft 20. A rate of change module 604 determines a first rate of change and a second rate of change from the first measurement and the second measurement according to step 204 of method 200. A shear detection module 606 detects shear 40 of the shaft 20 according to step 206 of method 200. The shear detection module 606 detects shear when the first rate of change is positive and the second rate of change is negative. In this example, when shear 40 of the shaft 20 is detected, the computing device 400 outputs a shutdown command for the engine 10.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the methods and systems for detection may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A method (200) for detecting shear of a rotating shaft (20), the method (200) comprising:
acquiring, at a computing device (400), a first measurement and a second measurement of a rotational speed of the shaft (20), the first measurement taken at a first location along the shaft and the second measurement taken at a second location along the shaft, the first location axially-spaced from the second location;
determining, at the computing device (400), a first rate of change of the rotational speed from the first measurement and a second rate of change of the rotational speed from the second measurement; and
detecting, at the computing device (400), shear of the shaft (20) when the first rate of change is positive and the second rate of change is negative.

2. The method (200) of claim 1, wherein detecting shear of the shaft (20) comprises:
monitoring an amount of time during which the first rate of change is positive and the second rate of change is negative; and
detecting shear of the shaft (20) when the amount of time exceeds a predetermined time period.

3. The method (200) of claim 1, wherein detecting shear of the shaft (20) comprises:
monitoring a first amount of time during which the first rate of change exceeds a first threshold and a second amount of time during which the second rate of change is below a second threshold; and
detecting shear of the shaft (20) when at least one of the first amount of time and the second amount of time exceeds a predetermined time period.

4. The method (200) of claim 1, wherein detecting shear of the shaft (20) comprises:
determining a difference between the first rate of change and the second rate of change;
comparing the difference to a threshold; and
detecting shear of the shaft when the difference exceeds the threshold, optionally wherein shear of the shaft (20) is detected when the difference exceeds the threshold for a predetermined time period.

5. The method (200) of claim 1, wherein detecting shear of the shaft comprises:
determining a rate of change of a difference between the first rate of change and the second rate of change;
comparing the rate of change of the difference to a threshold; and
detecting shear of the shaft (20) when the rate of change of the difference exceeds the threshold, optionally wherein shear of the shaft (20) is detected when the rate of change of the difference exceeds the threshold for a predetermined time period.

6. The method (200) of any preceding claim, wherein acquiring the first measurement comprises obtaining the first measurement from a first phonic wheel sensing assembly (51) and acquiring the second measurement comprises obtaining the second measurement from a second phonic wheel sensing assembly (52).

7. The method (200) of any preceding claim, wherein the shaft (20) has a first end (31) being driven and a second end (32) being loaded, the first measurement taken adjacent the first end (31) and the second measurement taken adjacent the second end (32).

8. A system for detecting shear of a rotating shaft (20), the system comprising:
at least one processing unit (412); and
a non-transitory computer-readable memory (414) having stored thereon program instructions (416) executable by the at least one processing unit (412) for:
acquiring a first measurement and a second measurement of a rotational speed of the shaft (20), the first measurement taken at a first location along the shaft (20) and the second measurement taken at a second location along the shaft (20), the first location axially-spaced from the second location;
determining a first rate of change of the rotational speed from the first measurement and a second rate of change of the rotational speed from the second measurement; and
detecting shear of the shaft (20) when the first rate of change is positive and the second rate of change is negative.

9. The system of claim 8, wherein the program instructions (416) executable by the at least one processing unit (412) for detecting shear of the shaft (40) comprise:
monitoring an amount of time during which the first rate of change is positive and the second rate of change is negative; and
detecting shear of the shaft (20) when the amount of time exceeds a predetermined time period.

10. The system of claim 8, wherein the program instructions (416) executable by the at least one processing unit (412) for detecting shear of the shaft (20) comprise:
monitoring a first amount of time during which the first rate of change exceeds a first threshold and a second amount of time during which the second rate of change is below a second threshold; and
detecting shear of the shaft (20) when at least one of the first amount of time and the second amount of time exceeds a predetermined time period.

11. The system of claim 8, wherein the program instructions (416) executable by the at least one processing unit (412) for detecting shear of the shaft (20) comprise:
determining a difference between the first rate of change and the second rate of change;
comparing the difference to a threshold; and
detecting shear of the shaft (20) when the difference exceeds the threshold, optionally wherein shear of the shaft (20) is detected when the difference exceeds the threshold for a predetermined time period.

12. The system of claim 8, wherein the program instructions (416) executable by the at least one processing unit (412) for detecting shear of the shaft (20) comprise:
determining a rate of change of a difference between the first rate of change and the second rate of change;
comparing the rate of change of the difference to a threshold; and
detecting shear of the shaft (20) when the rate of change of the difference exceeds the threshold, optionally wherein shear of the shaft (20) is detected when the rate of change of the difference exceeds the threshold for a predetermined time period.

13. The system of any of claims 8 to 12, wherein the rotating shaft (20) is that of a gas turbine engine (10) comprising a turbine (18) and a compressor (14), the first end of the shaft (20) is driven by the turbine (18) and the second end of the shaft (20) is loaded with the compressor (14).

14. The system of any one of claims 8 to 13, wherein the program instructions (416) executable by the at least one processing unit (412) for acquiring the first measurement comprise obtaining the first measurement from a first phonic wheel sensing assembly (51) and the program instructions (416) executable by the at least one processing unit (412) for acquiring the second measurement comprise obtaining the second measurement from a second phonic wheel sensing assembly (52).

15. The system of any one of claims 8 to 14, wherein the shaft (20) has a first end (31) being driven and a second end (32) being loaded, the first measurement taken adjacent the first end (31) and the second measurement taken adjacent the second end (32).
